# EUROPÄISCHE PATENTSCHRIFT

(11) **EP 0 475 337 B1**
(45) Veröffentlichungstag und Bekanntmachung des Hinweises auf die Patenterteilung: **09.03.1994**
(21) Anmeldenummer: 91115232.0
(22) Anmeldetag: 10.09.1991
(51) Int. Cl.: F28G 1/12

(54) **Verfahren zur Messung der Reinigungswirksamkeit von Reinigungskörpern in Wärmetauschern**
Method of measuring the cleaning efficiency of cleaning bodies in heat exchangers
Procédé pour mesurer l'efficacité de nettoyage des corps nettoyants dans des échangeurs de chaleur

(30) Priorität: 14.09.1990 DE 4029196
(43) Veröffentlichungstag der Anmeldung: 18.03.1992
(60) Teilanmeldung: 93104611.4
(73) Patentinhaber: Taprogge Gesellschaft mbH, 58300 Wetter (DE)
(72) Erfinder: Czolkoss, Wolfgang, W-4600 Dortmund 1 (DE)
(74) Vertreter: Patentanwälte Wenzel & Kalkoff

(56) Entgegenhaltungen:
- DE-A- 3 827 900
- DE-C- 3 316 020

## Beschreibung

Die Erfindung betrifft ein Verfahren zur Messung der Reinigungswirksamkeit von Reinigungskörpern, die zur Reinigung von Rohrbündelwärmetauschern im Kreislauf in den Wassereinlauf eingespeist, durch die einzelnen Rohre gespült, im Wasserauslauf gefangen und nach Durchlaufen einer Schleuse zur Neueinspeisung und/oder Inspektion wieder in den Wassereinlauf eingespeist werden, bei dem ein zu messender Reinigungskörper durch ein Wasser führendes Rohr hindurchgeführt wird, das zur meßtechnischen Erfassung der Reinigungswirksamkeit ausgerüstet ist.

Die Reinigungswirkung der Reinigungskörper basiert auf der Tatsache, daß sie größer sind als die Innendurchmesser der durchspülten Rohre. Für die Messung der Wirksamkeit der elastischen Reinigungskörper gibt es mehrere Vorschläge. Einer davon kann der Deutschen Patentschrift DE-C-33 16 020 entnommen werden. Die im Kreislauf geführten Reinigungskörper werden dabei nach einem statistischen Zufall durch einen Bypass geführt, in dem sich ein Meßrohr befindet, dessen Auslenkung in Transportrichtung des zu messenden Reinigungskörpers als Reibkraft gemessen wird. Das Meßrohr ist wenige Zentimeter lang, wobei der Reinigungskörper bei der Messung von dem Kühlwasserstrom durch das Meßrohr gespült wird.

Diese Art der Wirksamkeitsmessung der Reinigungswirkung von Reinigungskörpern zur Reinigung von Kondensatoren hat sich im Prinzip bewährt. Allerdings ist der Bauaufwand relativ hoch, so daß derartige Meßvorrichtungen teuer sind. Ein weiterer Nachteil liegt darin, daß wegen der Kürze des Meßrohres nicht immer die für die Reinigung relevante Lage der Kugel innerhalb des Meßrohres zustande kommt, wenn die Reinigungskörper bereits etwas abgenutzt sind und nicht mehr die ideale Kugelform aufweisen, sondern eher einer Tonnenform angenähert sind. Bei dem Eintritt einer Kugel in ein Wärmetauscherrohr ist es nämlich so, daß nach dem Eintritt die Kugel ihre Lage des geringsten Widerstandes einnimmt, also die schlechteste Reinigungswirkung hat. Je nach zufälliger Lage beim Eintritt in das Meßrohr wird entweder eine höhere oder niedrigere Reibkraft bei der Reinigung signalisiert, so daß eine Restunsicherheit bleibt, ob die gemessenen Kugeln tatsächlich die vermutete Reinigungswirkung haben. Insofern ist bei nicht mehr ganz ideal kugelförmigen Reinigungskörpern eine Diskrepanz möglich zwischen gemessener und tatsächlicher Reinigung.

Aus DE-A-38 27 900 ist es bekannt, die Größe eines in einer strömenden Flüssigkeit mitgeführten Reinigungskörpers mittels einer Lichtschranke zu messen. Dabei geht die Harte des Reinigungskörpers nicht in die Beurteilung der Reinigungswirkung ein. Ebenso stellen tonnenförmig verschlissene Reinigungskörper eine Neßunsicherheit dar.

Es ist Aufgabe der Erfindung, ein Verfahren der eingangs genannten Art so zu verbessern, daß auch diese Restunsicherheit beseitigt wird und der bauliche Aufwand reduziert wird.

Zur Lösung dieser Aufgabe schlägt die Erfindung vor, daß durch die Rohrwand infolge einer äußeren Wärmequelle das Wasser im Inneren des Rohres erwärmt wird, und daß an einer vorgegebenen Stelle des Rohres der Temperaturverlauf bei einem das Rohr passierenden Reinigungskörper gemessen und ausgewertet wird.

Es wurde überraschend gefunden, daß bei einem von außen beheizten Rohr, durch das ein Reinigungskörper infolge eines Antriebes durch strömendes Wasser hindurchgeführt wird, im kleinsten Bereich vor und hinter dem Reinigungskörper Temperaturunterschiede vorhanden sind, die abhängig sind von der Reibkraft des Reinigungskörpers, also von der Kraft zur Entfernung von Verunreinigungen an der Innenseite des entsprechenden Rohres. Das Strömungsdruckgefälle, das den Antrieb des Reinigungskörpers durch das Rohr bewirkt, ist dafür verantwortlich, daß die Strömung zwischen Reinigungskörper und Rohrinnenwand den Reinigungskörper überholt, was - in Strömungsrichtung betrachtet - unmittelbar vor dem Reinigungskörper aufgrunc des sog. Jet-Effektes zu heftigen Turbulenzen der Grenzschicht der Wassersäule führt. Aufgrund dieser Turbulenzen ist der Wärmeübergang zwischen der Wärmequelle und der Strömung recht gut, so daß sich die Flüssigkeit in diesem Bereich vergleichsweise gut und gleichmäßig erwärmt. Unmittelbar hinter dem Reinigungskörper ist hingegen eine Strömungsberuhigung festzustellen, so daß weniger Wärme aus dem Rohr in die Flüssigkeit übergeht und diese damit geringfügig kälter ist als bei einer sehr turbulenten Strömung.

Im Ergebnis ist bei einem Reinigungskörper mit einer großen Reibkraft, bei der also eine entsprechend hohe Druckdifferenz zwischen der Stelle vor und hinter der Kugel auftritt, ein ausgeprägter Temperatursprung bei dem Passieren der vorgegebenen Meßstelle festzustellen, also ein Temperaturanstieg vor dem Reinigungskörper, ein mehr oder weniger "heftiger" Temperaturabfall im Augenblick des tatsächlichen Passierens der Kugel an der Meßstelle vorbei auf einen Wert, der unterhalb der normalen Wassertemperatur liegt, und eine anschließende erneute Temperaturerhöhung auf das normale Niveau. Der Temperaturverlauf ist also durch einen Anstieg, einen steilen Abfall und eine Rückkehr zu annähernd dem Anfangswert innerhalb von weniger als einer halben Sekunde gekennzeichnet.

Eine verläßliche Messung, nach der die Reinigung der Wärmetauscherrohre erfolgreich betrieben werden kann, bedingt eine Bewertung des erläuterten Temperatursprunges auf der Grundlage von Erfahrungswerten. Es ist also zunächst ratsam, Reinigungskörper zur Eichung einer entsprechenden Anlage durch das Rohr zu schicken, an dem die Messung vorgenommen wird, deren Lösedruck, Durchmesser und Rundheit also bekannt bzw. vermessen worden sind. Durch Archivieren einer Vielzahl derartiger Messungen kann der Bereich ermittelt werden, der für Reinigungskörper im Idealzustand repräsentativ ist. Sodann können im Durchmesser kleinere Reinigungskörper, die ebenfalls eine ideale Kugelform aufweisen, eingesetzt werden, wobei der kleinere Durchmesser ggfs. durch Abschleifen mit Hilfe entsprechender Maschinen erreicht wird. Wiederum läßt sich durch Archivierung entsprechender Meßwerte ein Bereich festlegen, der für diese abgenutzte Form eines Reinigungskörpers repräsentativ ist. Wenn der Durchmesser der Reinigungskörper dem Innendurchmesser des Rohres entspricht, ist kein eigentlicher Vortrieb mit einem Druckgefälle vorhanden, sondern der Reinigungskörper wird quasi kräftelos durch das Rohr geschwemmt. Bei diesem Grenzfall ist so gut wie kein Temperaturausschlag mehr feststellbar. Da auch keine Reinigungswirkung vorhanden ist, wird vorher schon die Grenze für die Reinigungswirksamkeit der Reinigungskörper festgelegt. Es sei mit allem Nachdruck darauf hingewiesen, daß diese erläuterte Einjustierung einer Anlage nur ein einziges Mal erforderlich ist, also noch nicht einmal bei jeder Installation einer Anlage, sondern ein einziges Mal vor Inbetriebnahme der allerersten Anlage. Die genannten Bereichswerte liegen also zum gegenwärtigen Zeitpunkt bereits fest.

Abweichend von dieser beschriebenen Art der Zuordnung zwischen dem gemessenen Temperaturverlauf und der Reinigungswirksamkeit kann eine tatsächlich installierte Wärmetauscher-Anlage benutzt werden, die sich im Neuzustand befindet. Es werden dann Reinigungskörper eingesetzt, die exakt vermessen sind, also deren Durchmesser bekannt ist und deren Rundheit gewährleistet ist. Anhand der dann tatsächlich gemessenen Temperaturverläufe kann eine Beziehung zu einer Reibkraft bzw. einer Reinigungswirksamkeit bei sauberem Rohr und neuen Reinigungskörpern hergestellt werden. Wiederum kann mit Hilfe gemessener, im Durchmesser kleinerer Kugeln, die durchaus noch eine Reibkraft aufweisen, die Anderung des Temperaturverlaufes festgestellt werden, wenn die Reinigungskörper bei neuem Rohr abgenutzt sind. Diese Art der Eichung an einer entsprechenden Anlage hat den Vorteil, daß alle Parameter, die an der Ausbildung des Temperaturverlaufs beteiligt sind, mit erfaßt worden sind. Dazu gehört in erster Linie das Temperaturniveau, die Lange des entsprechenden Wärmetauscherrohres und die Wärmemenge, die beim Passieren eines Wärmetauscherrohres aufgenommen wird.

Bei der Messung der Reinigungswirksamkeit der Reinigungskörper nach dem erfindungsgemäßen Verfahren geht nicht nur der Durchmesser ein, sondern auch die Härte jedes Reinigungskörpers, die z.B. bei Anwesenheit von Kohlenwasserstoffen in einem Kühlwasser nachläßt, während der Durchmesser infolge Quellens anwächst; in der Regel bestehen nämlich die Reinigungskörper aus Schwammgummi. Die Reinigungswirkung derartiger Reinigungskörper ist trotz des erhöhten Durchmessers nicht besonder gut, was sich in einer geringeren Reibkraft niederschlägt, so daß auch der Druckabfall über die Kugel beim Transport durch das Rohr geringer ist. Infolge dessen ist auch der erläuterte Jet-Effekt an der Kontaktzone zwischen dem Reinigungskörper und der Innenwand des Rohres in der Auswirkung geringer, was einen entsprechend geringeren Temperaturausschlag zur Folge hat. Das erfindungsgemäße Verfahren gestattet also auch die Erfassung derartiger beschädigter Kugeln. Indirekt wird nämlich stets die Reibkraft gemessen, die allein entscheidend für die Reinigungswirksamkeit ist.

Es ist besonders zweckmäßig, die Messung direkt an einem Wärmetauscherrohr vorzunehmen, an dem alle Voraussetzungen zur Durchführung einer Messung gemäß der Erfindung erfüllt sind. Die Meßstelle wird vorzugsweise an das Ende des Rohres gelegt, wo eine gute Zugänglichkeit für die Installation eines Temperaturfühlers und dessen Drahtverbindungen bzw. eines Signalsenders vorhanden ist. Die einzige Bedingung, die erfüllt werden muß, ist die nahezu trägheitslose Messung des Temperaturverlaufs beim Passieren eines Reinigungskörpers dieser Stelle sowie eine entsprechende Auswertung, mit einer Auflösung, die sicher eine Differenzierung von weniger als einem Zehntel Grad ermöglicht.

Selbstverständlich kann die Meßanordnung an einem Wärmetauscher mehrfach vorhanden sein, so daß gleichzeitig eine Information darüber erhalten wird, wie die Reinigungskörperverteilung innerhalb des Wärmetauschers bzw. innerhalb eines Weges eines mehrwegigen Wärmetauschers ist. Jeder Durchgang eines Reinigungskörpers, der noch eine nennenswerte Reinigungswirkung hat, ist also gleichzeitig auch eine Reinigungskörpermeldung und kann als solche ausgewertet werden. Da der bauliche Aufwand sehr gering ist, können zehn oder noch mehr Meßstellen installiert werden, wobei gleichzeitig der Effekt im Fall des Ausfalls einer Meßstelle gering ist, da die anderen für die Wirksamkeitsmessung weiterhin zur Verfügung stehen.

Nachfolgend wird ein Ausführungsbeispiel der Erfindung, das in der Zeichnung dargestellt ist, näher erläutert; in der Zeichnung zeigen:
Figur 1 eine schematische Übersichtszeichnung eines Dampfkondensators mit einer Anlage gemäß der Erfindung,
Figur 2 eine Querschnittsansicht durch den Bereich eines Kondensatorendes, das erfindungsgemäß mit einer Temperaturmeßeinrichtung versehen ist,
Figur 3 einen Ausschnitt aus einem Meßprotokoll zur Verdeutlichung des Temperaturverlaufs beim Passieren eines Reinigungskörpers einer erfindungsgemäß ausgestatteten Meßstelle und
Figur 4 zwei Meßprotokolle zur Verdeutlichung der Wiedererkennbarkeit eines ausreichend auffälligen Temperaturprofils zwischen Rohreintritt und Rohraustritt bei einem Kühlwasserkondensator.

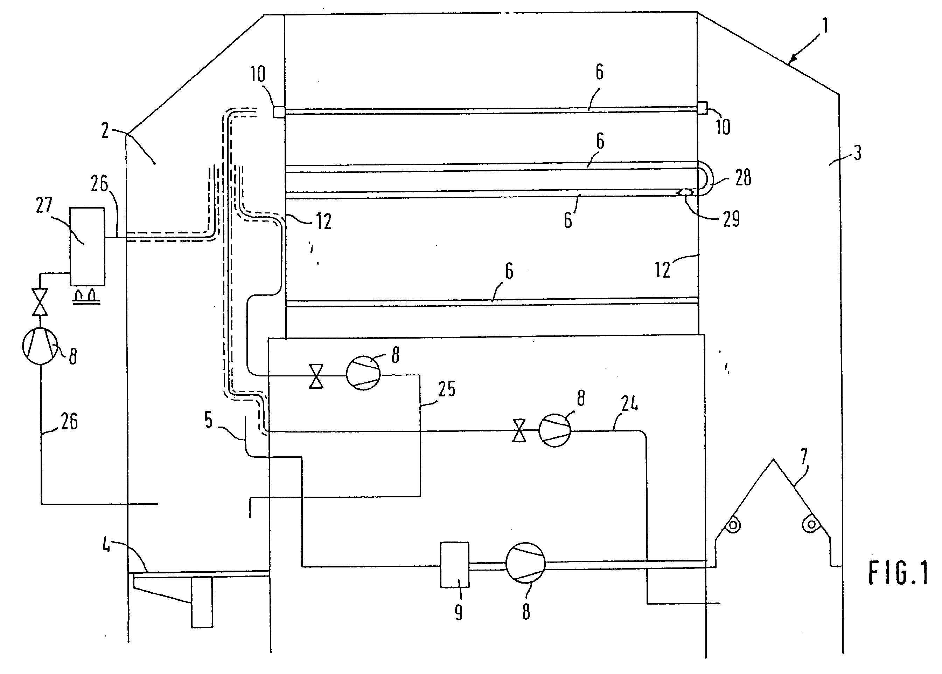

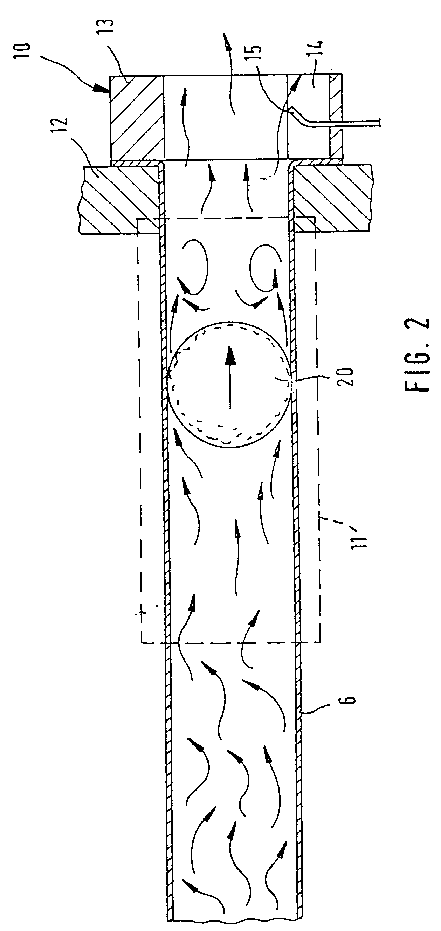

In der Figur 1 ist schematisch ein Dampfkondensator 1 wiedergegeben, bei dem der Dampfweg nicht eingezeichnet ist. In einem Kühlwassereintritt 2 wird Kühlwasser durch Kondensatorrohre 6 gepumpt, das den Kondensator 1 über einen Kühlwasserauslaß 3 verläßt. Auf der Kühlwassereintrittsseite ist ein rückspülbares Filter 4 vorhanden, um grobe Verunreinigungen zurückzuhalten. Am Ausgang des Kühlwasserauslaufs befindet sich eine Siebeinrichtung 7, mit deren Hilfe Reinigungskörper 20 (Figur 2) aufgefangen werden, die im Kreislauf durch die einzelnen Kondensatorrohre 6 zu deren Reinigung hindurchgeführt werden. Dazu ist eine Leitung 5 im Kühlwassereinlauf 2 vorhanden, durch die die Reinigungskörper 20 in das Kühlwasser gelangen. Die Leitung 5 wird aus einer Schleuse 9 gespeist, in der die Reinigungskörper gefangen, aussortiert, ergänzt, inspiziert, gemessen oder in sonstiger Weise behandelt werden können. Eine Pumpe 8 sorgt für die Förderung der Reinigungskörper in die Schleuse 9 hinein bzw. durch die Schleuse 9 hindurch.

Bei der Erfindung geht es darum, die Reinigungswirksamkeit der Reinigungskörper 20 zu überprüfen, die in erster Linie vom Übermaß und ihrer Harte abhängt. Anstelle nur die Reinigungswirkung indirekt über relevante Hilfsgrößen wie z.B. Übermaß und Harte zu ermitteln, wird die Zielgröße Reinigungswirkung durch direktes Messen des Wärmeübergangs vom Dampf auf das Kühlwasser überprüft, wodurch eine Überprüfung des tatsächlichen Reinheitsgrades des gemessenen Kondensatorrohres 6 erfolgt und automatisch alle nur denkbaren Einflußparameter der Reinigungswirkung Berücksichtigung finden. Außerdem ist durch eine Messung an einzelnen entsprechend ausgewählten Kondensatorrohren eine sehr frühe Erkennung von beginnender Verschmutzung oder Korrosion möglich.

In der Figur 2 ist die Austrittsseite eines Kondensatorrohres 6 wiedergegeben, das mit einem Meßvorsatz 10 versehen ist. Im einzelnen handelt es sich um einen Ring 13, der fluchtend zu dem Kondensatorrohr 6 auf die Außenseite des Rohrbodens 12 des Kondensators 1 aufgesetzt ist. An seiner unteren Seite trägt er einen Schlitz 14, in dem ein Temperaturfühler 15 untergebracht ist.

Der Temperaturfühler 15 muß äußerst schnell reagieren. Es hat sich ein Mantel-Thermoelement bewährt, das einen Außendurchmesser von 0,5 mm aufweist. Es sind zwar noch kleinere Thermoelemente 15 bekannt, es muß allerdings auch eine ausreichende Robustheit vorhanden sein, da gelegentlich auch eine Verunreinigung in das Kondensatorrohr 6 eindringen kann und vor das Thermoelement stoßen kann. Eine solche Beanspruchung sollte das Thermoelement 15 aushalten können.

In der Figur 2 ist mit dem Bezugszeichen 11 ein Kontrollvolumen definiert, das sich gemeinsam mit dem Reinigungskörper 20 durch das Rohr 6 bewegt. Zunächst sei darauf hingewiesen, daß Reinigungskörper 20, die eine von der idealen Kugelform abweichende Form aufweisen, die einer Tonne angenähert ist, nach dem Eintritt in das Kondensatorrohr 6 diejenige Lage einnehmen, in der die Reinigungswirkung am geringsten ist, in der also der geringste Widerstand gegenüber dem Kondensatorrohr 6 vorhanden ist. Diese Lage hat auch die geringsten Reibkräfte zur Folge, also die jeweils schlechteste Reinigungswirkung. Da in besonderer Ausgestaltung der Erfindung ein Kondensatorrohr 6 als Bestandteil der Meßeinrichtung vorgesehen wird und die Messung des Temperaturverlaufs beim Passieren eines Reinigungskörpers 20 am Ende des Kondensatorrohres 6 erfolgt, ist davon auszugehen, daß im Falle einer Messung stets diese Lage mit der geringsten Reibkraft des Reinigungskörpers 20 eingenommen wird. Damit wird gegenüber Meßeinrichtungen, bei denen die Reibkraft direkt gemessen wird, stets der ungünstigste Reinigungsfall für die Messung erfaßt, der für die Reinigungswirksamkeit der Reinigungskörper der einzig relevante Meßwert ist, weil die tatsächliche Reinigung über den größten Abschnitt eines Kondensatorrohres mit der geringsten Lösekraft erfolgt, die sich selbsttätig nach wenigen Zentimetern einstellt.

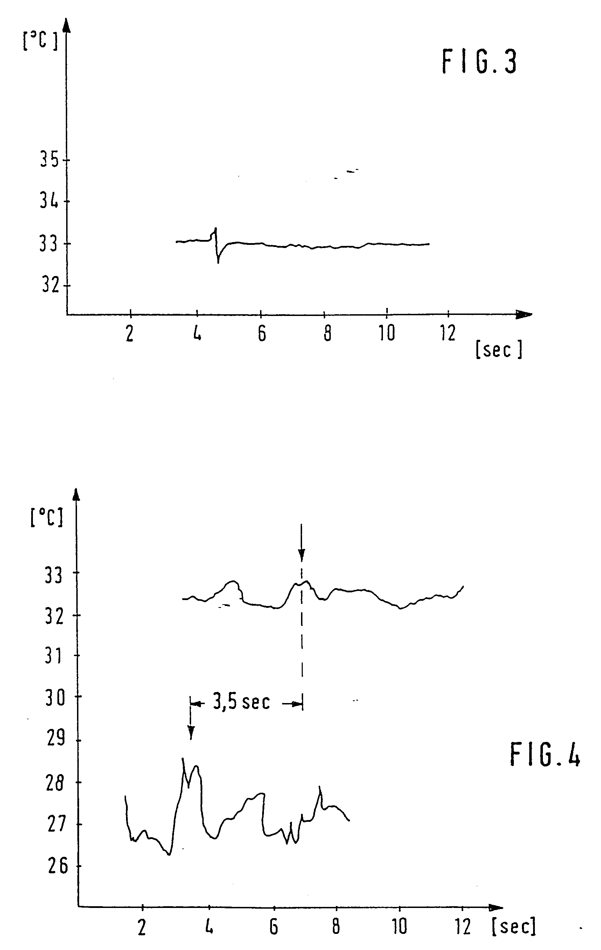

In der Figur 3 ist ein Meßprotokoll wiedergegeben, das den Temperaturverlauf über der Zeit anzeigt, wie er von dem Thermoelement 15 beim Passieren eines Reinigungskörpers 20 aufgetreten ist. Es ist deutlich ein Anstieg, ein steiler Abfall um annähernd den doppelten Betrag und ein etwas langsamerer erneuter Anstieg auf das alte Temperaturniveau in einer Zeitspanne von weniger als einer halben Sekunde zu erkennen. Der Temperaturverlauf gibt die Verhältnisse innerhalb des Kontrollvolumens 11 wieder, die sich im Verlauf der Durchströmung des Kondensatorrohres 6 gebildet haben und am Ende des Rohres innerhalb des Ringes 13 mit Hilfe des Temperaturfühlers 15 erfaßt werden. Es wurde eingangs schon erläutert, daß aufgrund eines Jet-Effektes vor dem Reinigungskörper 20 eine kräftige Durchwirbelung und damit eine gute Wärmeaufnahme des Kühlwassers aus der warmen Rohrwand vorhanden ist, während hinter dem Reinigungskörper eine eher beruhigte Situation vorhanden ist, wodurch in diesem Teilstrom weniger Wärme von der Rohrwand aufgenommen wird.

Das Mantel-Thermoelement 15 ist mit einer Auswerteinheit verbunden, in der anhand der in der Figur 3 wiedergegebenen Temperaturausschläge zunächst einmal die Reinigungswirkung der erfaßten Reinigungskörper festgestellt werden kann. Außerdem kann der Umlauf der Reinigungskörper kontrolliert werden, also unter Anwendung der Statistik die Zahl derjenigen Reinigungskörper ermittelt werden, die tatsächlich an der Reinigung beteiligt sind und nicht etwa z.B. in Totwassergebieten verharren. Die ermittelte Zahl ist vergleichbar mit der Zahl der eingegebenen Reinigungskörper. Unter der Voraussetzung, daß gleichmäßig über den Rohrboden verteilt Meßvorsätze 10 an den dort befindlichen Kondensatorrohren 6 angebracht sind, kann die Verteilung der Reinigungskörper innerhalb des Rohrbündels eines Kondensators 1 kontrolliert werden.

Anhand der gemessenen Temperaturschwankungen im Augenblick des Passierens eines Reinigungskörpers am Rohrende kann die Reinigungsintensität, mit der der gesamte Kondensator gereinigt wird, abgeschätzt werden. Diese Reinigungsintensität wird bestimmt von der Reinigungswirkung der in Umlauf befindlichen Reinigungskörper und ihrer Zahl bzw. der Zahl ihrer Durchgänge je Zeiteinheit für die Wärmetauscherrohre. Je nach der Intensität werden die Reinigungsintervalle verlängert oder verkürzt, oder es werden frische Reinigungskörper in den Kreislauf eingebracht, die eine hohe Reinigungswirkung haben.

Alle relevanten Werte können auf einem Monitor angezeigt werden, mit Hilfe eines Druckers ausgedruckt werden oder an eine andere Stelle transferiert werden, beispielsweise in den Kontrollraum einer Kraftwerksanlage. Je nach Automatisierungsgrad kann das Herausfangen verbrauchter Reinigungskörper und das neue Eingeben manuell, halbautomatisch oder vollautomatisch erfolgen, es kommt lediglich darauf an, daß sehr früh eine Verschlechterung der Reinigungswirksamkeit festgestellt wird und Gegenmaßnahmen eingeleitet werden können.

Der in der Figur 2 dargestellte und erläuterte Meßvorsatz 10 kann als identisches Bauteil auch zusätzlich an dem Rohrboden des Kühlwassereinlaufs 2 (Figur 1) angebracht sein, was im übrigen in der Figur 1 an dem obersten, dargestellten Kondensatorrohr 6 angedeutet ist. Damit besteht die Möglichkeit, die Wassereintrittstemperatur und die Wasseraustrittstemperatur des das entsprechende Kondensatorrohr 6 durchströmenden Kühlwassers zu messen. Mit dieser Einrichtung kann die von dem Kühlwasser bei dem Durchgang durch ein Kondensatorrohr aufgenommene Wärmemenge bestimmt werden, wenn der Massenstrom des Kühlwassers bekannt ist, also das Produkt aus Querschnittsfläche, Strömungsgeschwindigkeit und Dichte. Während die temperaturabhängige Dichte bekannt ist und die Querschnittsfläche des Kondensatorrohres konstruktiv festliegt und also ebenso bekannt ist, muß die Strömungsgeschwindigkeit gemessen werden. Das kann mit Hilfe von entsprechenden Meßgeräten geschehen.

Bei dem Dampfkondensator gemäß Fig. 1 wird die Durchströmungsgeschwindigkeit durch Auffinden von Temperaturprofilen ermittelt, indem ein von Kühlwasser durchströmtes Kondensatorrohr 6 mit jeweils einem Meßvorsatz 10 am vorderen und hinteren Ende versehen wird. Es hat sich nämlich gezeigt, daß bei einem ausreichend auffälligen Temperaturprofil beim Eintritt des Kühlwassers in das Kondensatorrohr eine Wiedererkennung dieses Profiles am Rohrende möglich ist, obwohl das Kühlwasser in der Zwischenzeit sowohl Warme aus dem Dampf aufgenommen hat als auch verwirbelt worden ist. Ein ausreichend auffälliges Temperaturprofil kann in unterschiedlichster Weise erzeugt werden.

In der Figur 4 sind zwei Meßprotokolle wiedergegeben, von denen jeder den Temperaturverlauf am Rohreintritt (untere Linie) und am Rohraustritt (obere Linie) innerhalb eines bestimmten Zeitintervalls zeigen. Das ausreichend auffällige Temperaturprofil beim Eintritt in das Kondensatorrohr 6 stammt aus der Durchströmung eines ersten Kondensatorweges ohne zusätzliche Hilfsmittel. Das aus der ersten Kondensatorstufe austretende Kühlwasser hat also unterschiedliche Zonen, die Temperaturunterschiede von mehreren Kelvin aufweisen. Es wurde nun überraschend gefunden, daß derartige Temperaturprofile trotz starker Verwirbelung und trotz Wärmeaufnahme in dem anschließend durchströmten Kondensatorrohr 6 des zweiten Weges am Ende des Rohres mit ausreichender Sicherheit wiedererkennbar sind. Die in der Figur 4 mit zwei Pfeilen versehenen Bereiche entsprechen sich. Sie liegen 3,5 Sekunden auseinander, und diese 3,5 Sekunden sind die Zeitdauer, die das Kühlwasser zur Durchströmung dieses Kondensatorrohres 6 benötigt. Da die Länge des Kondensatorrohres 6 bekannt ist, kann in dieser Weise die Durchströmungsgeschwindigkeit ermittelt werden.

Die Zuordnung bzw. Wiedererkennung eines ausreichend auffälligen Temperaturprofils wird mit Hilfe einer Kreuzkorrelation vorgenommen. Ein solches Meßverfahren wird in der Zeitschrift Meßtechnik, Heft 7/71 von den Autoren F. Mesch, H.-H. Daucher und R. Fritsche als Mitteilung aus dem Institut für Meß- und Regeltechnik der Universität (TH) Karlsruhe beschrieben. Auf diese Veröffentlichung wird Bezug genommen.

Die Kenntnis über die Strömungsgeschwindigkeit kann in zweifacher Weise ausgenutzt werden. Es wurde vorangehend schon erläutert, daß bei einer Absolutmessung der Temperatur am Rohranfang und am Rohrende zusätzlich zu der Geschwindigkeitsmessung über das ausreichend auffällige Temperaturprofil die aufgenommene Warme berechnet werden kann, die das Kühlwasser bei einem Durchgang durch ein Kondensatorrohr 6 aufnimmt. Bei Kenntnis der Dampftemperatur kann dann auch der Wärmeübergang vom Dampf auf das Kühlwasser berechnet werden, so daß der Wärmedurchgangswert k ermittelbar ist, der Aufschluß über den Reinheitsgrad des Kondensatorrohres 6 gibt. Die Dampftemperatur kann sehr leicht durch Stillegen eines benachbarten Kondensatorrohres 6 ermittelt werden, in das dann eine Temperaturmeßeinrichtung eingesteckt wird. Das Verschließen eines einzigen Kondensatorrohres 6 bei beispielsweise zehntausend Rohren innerhalb eines Dampfkondensators ist vom Wirkungsgrad her unbeachtlich. Selbstverständlich kann die Dampftemperatur auch direkt mit Hilfe von Temperaturfühlern oder aus der Messung des Dampfdruckes im Dampfraum des Kondensators 1 ermittelt werden, wenn entsprechende Anordnungen vorhanden sind.

Der Druckverlust zwischen dem Rohreintritt und dem Rohraustritt kann sehr einfach ermittelt werden. Bei Kenntnis des Druckverlustes und der Strömungsgeschwindigkeit kann die Rohrreibungszahl berechnet werden. Diese gibt Hinweise auf die Rauhigkeit der Oberfläche und damit auf das Vorhandensein und die Art von Ablagerungen. Wenn beispielsweise in den Kondensatorrohren 6 Kalkablagerungen entstehen, steigt die Rohrreibungszahl zunächst stark an, was in der beschriebenen Weise sofort feststellbar ist. Bei gleichem Differenzdruck zwischen Einlaß und Auslaß an dem Kondensator 1 sinkt die Durchströmungsgeschwindigkeit deutlich ab, so daß die in dieser Weise angestiegene Reibungszahl der Oberfläche sofort bemerkt wird. Durch Erhöhen der Anzahl der in Umlauf befindlichen Reinigungskörper oder durch Eindosieren von speziellen, möglicherweise mit Korund beschichteten Reinigungskörpern, kann eine sofortige Gegenmaßnahme eingeleitet werden. Es ist also eine erhebliche Transparenz über den Zustand der Kondensatorrohre 6 und die Wirksamkeit der Reinigungskörper vorhanden, obwohl lediglich eine Druckdifferenzmeßeinrichtung und pro zu messendem Kondensatorrohr 6 zwei Thermoelemente im Einsatz sind.

Die Entstehung von Zonen unterschiedlicher Temperatur im Kühlwassereinlauf 2 (Figur 1) des ersten Weges eines Kondensators 1 bzw. bei einwegigen Kondensatoren kann selbstverständlich auch künstlich erzeugt werden durch eine Beimengung erwärmter oder gekühlter Stoffe. Zum Beispiel kann an einer vorgegebenen Stelle, die für ein zu messendes Rohr oder für mehrere ausschlaggebend ist, Dampf eingeblasen werden oder gekühltes bzw. erwärmtes Wasser eindosiert werden, wobei es insbesondere verschiedene Möglichkeiten gibt, erwärmtes Wasser einzusetzen, da dies bereits am Austritt des Wärmetauschers zur Verfügung steht. Es hat sich gezeigt, daß mit derartigen Mitteln ebenfalls ausreichend starke Temperaturschwankungen hervorgerufen werden können, so daß ähnliche Verhältnisse vorherrschen, wie wenn das Kühlwasser bereits den Weg eines Dampfkondensators durchlaufen hätte.

In der Figur 1 sind einige Beispiele skizziert, die dazu benutzt werden können, um ausreichend auffällige Temperaturschwankungen unmittelbar vor dem Eingang des Kondensatorrohres 6 im Kühlwassereinlauf 2 zu erzeugen, das auf beiden Seiten mit einem Meßvorsatz 10 ausgerüstet ist. Die eine Möglichkeit besteht darin, eine Bypass-Leitung 24 vorzusehen, die hinter der Siebeinrichtung 7 den erwärmten Kühlwasserauslauf abgreift und nach Druckerhöhung mit Hilfe einer Pumpe in den Kühlwassereinlauf 1 mündet. Abweichend davon kann mit Hilfe einer Wärmeaustauschleitung 25 Kühlwasser aus dem Kühlwassereinlauf 2 entnommen, mit Hilfe einer Pumpe 8 druckerhöht werden, um über eine vorgegebene Stelle in engem Kontakt mit dem Rohrboden 12 auf dieser Seite des Kondensators 1 geführt und schließlich an geeigneter Stelle in das Kühlwasser ausgelassen zu werden. Im Bereich des engen Kontaktes mit dem Rohrboden 12 nimmt das in der Wärmetauscherleitung 25 geführte Kühlwasser eine höhere Temperatur an, weil wegen der Benetzung des Rohrbodens 12 auf der inneren Seite mit Dampf an dieser Stelle eine höhere Temperatur vorherrscht als im übrigen Kühlwassereinlauf 2. Selbstverständlich kann zusätzlich oder alternativ außerhalb des Wassereinlaufes ein Wärmetauscher vorhanden sein, der mit Dampf betrieben wird oder mit einer sonstigen Prozeßwärme oder sonstige Energieform, die ausreichend zur Verfügung steht.

Statt eine Wärmeaustauschleitung 25 in unmittelbarer Nähe des Rohrbodens 12 zu verlegen, kann es ausreichend sein, an dieser Stelle ein Leitblech (nicht dargestellt) anzubringen, das zwischen sich und dem Rohrboden 12 eine Passage bildet, die ggfs. unterstützt durch geschickt geformte Einlässe und einen ebenso geschickt geformten Auslaß eine selbsttätige Durchströmung ohne Pumpunterstützung erfährt. Wenn der Austritt in unmittelbarer Nachbarschaft eines Eintritts eines Kondensatorrohres 6 angeordnet wird, kommt es an dieser Stelle zu der erwünschten Temperaturschwankung. Es sind im Kühlwassereinlauf 2 eines Kondensators 1 in der Regel genügend große Druckunterschiede vorhanden, um eine solche selbsttätige Durchströmung zu bewirken.

Statt eines Wärmetauschers kann auch ein Kessel 27 innerhalb einer Kesselleitung 26 vorgesehen sein, wobei wiederum mit Hilfe einer Pumpe 8 eine Druckerhöhung des Kühlwassers vorgenommen wird, das im Anschluß an das Rückspülfilter 4 aus dem Kühlwassereinlauf 2 entnommen wird. Selbstverständlich kann auch ein Kessel 27 in der Bypass-Leitung 24 oder in der Wärmetauscherleitung 25 vorhanden sein, wenn das erforderlich ist. Es kommt lediglich darauf an, daß der bauliche Aufwand gering gehalten, und die Energieaufwendungen für die Erwärmung bzw. die Förderung von erwärmten oder gekühlten Strömen nicht zu groß wird. Es ist also eine Anordnung zu bevorzugen, bei der aus relativ kleinen Leitungsquerschnitten gezielt wenig erwärmtes Wasser in der Nähe des interessierenden Eintritts des Kondensatorrohres 6 abgegeben wird. Da innerhalb des Kühlwassereinlaufes 2 gegenüber erwärmtem Wasser bereits eine heftige Kühlwirkung vorhanden ist, sollten die warmes Wasser führenden Leitungen isoliert werden, was durch gestrichelte Linien in der Figur 1 angedeutet ist.

Eine weitere Möglichkeit, in den Kühlwassereinlauf 2 erwärmtes Wasser einzudosieren, besteht darin, zwei nebeneinanderliegende Kondensatorrohre mit Hilfe eines Bogens 28 untereinander zu verbinden und an beliebiger Stelle eine Pumpe 29 vorzusehen. Zur Aufrechterhaltung des Stromes von warmem Wasser aus den beiden verbundenen Rohren genügt eine sehr geringe Leistung der Pumpe 29, da nur ein sehr geringes Druckgefälle erzeugt werden muß. Es ist sogar möglich, Druckunterschiede oder hydraulisch-dynamische Effekte am Rohrboden oder innerhalb der Wasserkammern als treibende Kraft auszunutzen.

Die Erfindung in ihrer Gesamtheit gestattet den Aufbau eines modularen Systems zum Betreiben eines Kondensators 1 mit gutem Wirkungsgrad. In der einfachsten Ausführung wird die Wirksamkeit der Reinigungskörper 20 festgestellt, und zwar mit Hilfe eines Meßvorsatzes 10 an mehreren Ausgängen der Kondensatorrohre 6 und einer entsprechenden Auswert- und Anzeigeeinrichtung. Befindet man sich in dem zweiten Weg eines Kondensators, kann durch zusätzliches Montieren der gleichen Meßvorsätze 10 an der Rohreintrittsseite und durch eine Ergänzung der Auswerteinheit um eine Einrichtung zur korrelativen Berechnung der Durchlaufzeit des Kühlwassers durch die Rohre aus dem Vergleich von Temperaturschwankungen am Ein- und Austritt die Kühlwassergeschwindigkeit und der Wärmeübergang zwischen dem Dampf und dem Kühlwasser gemessen werden, wobei allerdings noch eine Möglichkeit vorhanden sein muß, um die Dampftemperatur zu messen. Bei einwegigen Kondensatoren bzw. bei dem ersten Weg eines Kondensators muß die erläuterte Einrichtung zur Erzeugung ausreichend auffälliger Temperaturschwankungen eingerichtet werden.

Schließlich kann durch die zusätzliche Bereitstellung einer Differenzdruckmeßeinrichtung zur Bestimmung des Druckverlustes über das Rohrbündel der Reibungswiderstand der Kondensatorrohre berechnet und damit auf den Zustand der wasserseitigen Rohroberfläche geschlossen werden, womit sich insgesamt die größte Transparenz bei dem Betreiben eines Kondensators 1 ergibt. In jedem Fall werden sehr einfache Vorrichtungen eingesetzt, die einen geringen baulichen Aufwand mit sich bringen. Insbesondere sind die Einbauten in den wasserführenden Kanälen gering und beschränken sich auf kleinste Bauteile und einige Leitungen. Durch eine Vervielfältigung aller Meßpunkte ist eine Kontrolle der Kugelverteilung möglich, außerdem entsteht dadurch ein hochredundantes Überwachungssystem, bei dem der Ausfall der einen oder anderen Meßstelle bis zur nächsten Revision ohne Qualitätseinbuße verkraftet wird.

Die Reinigungswirksamkeit der Reinigungskörper und die Durchlaufgeschwindigkeit können an ein und demselben Rohr gemessen werden. Zeigt ein Temperatursprung den Durchgang eines Reinigungskörpers an, sollte der Meßwert für die Durchströmungsgeschwindigkeit und den Wärmedurchgangskoeffizienten verworfen werden, weil ein ein Kondensatorrohr passierender Reinigungskörper die Durchströmungsgeschwindigkeit absenkt und dadurch die Austrittstemperatur vorübergehend verändert. Liegt jedoch kein Temperatursprung am Rohrende vor, kann jederzeit die Durchströmungsgeschwindigkeitsmessung vorgenommen werden.

## Patentansprüche

1. Verfahren zur Messung der Reinigungswirksamkeit von Reinigungskörpern, die zur Reinigung der Rohre von Rohrbündelwärmetauschern im Kreislauf in den Wassereinlauf eingespeist, durch die Rohre gespült, im Wasserauslauf gefangen und nach Durchlaufen einer Schleuse zur Neueinspeisung und/oder Inspektion wieder in den Wassereinlauf eingespeist werden,
- bei dem ein Reinigungskörper (20) durch ein Wasser führendes Rohr (6) hindurchgeführt wird, das zur meßtechnischen Erfassung der Reinigungswirksamkeit ausgerüstet ist,
dadurch **gekennzeichnet**,
- daß durch die Rohrwand hindurch infolge einer äußeren Wärmequelle das Wasser im Inneren des Rohres (6) erwärmt wird und
- daß an einer vorgegebenen Stelle des Rohres (6) der Temperaturverlauf bei einem das Rohr (6) passierenden Reinigungskörper (20) gemessen und ausgewertet wird.

2. Verfahren nach Anspruch 1, dadurch **gekennzeichnet**, daß als Rohr (6) ein Rohr des Wärmetauschers (1) gewählt wird.

3. Verfahren nach Anspruch 1 oder 2, dadurch **gekennzeichnet**, daß der Temperaturverlauf am Ende des jeweiligen Rohres (6) gemessen wird.

4. Verfahren nach Anspruch 2 oder 3, dadurch **gekennzeichnet**, daß an mehreren Rohren (6) ein und desselben Wärmetauschers (1) bzw. ein und desselben Wärmetauscherweges der Temperaturverlauf gemessen wird.

## Claims

1. Method of measuring the cleaning efficiency of cleaning bodies which, for cleaning the tubes of tube bundle heat exchangers, are introduced in circulation into the water inlet, flushed through the tubes, intercepted in the water outflow and, after passing through a lock for re-introduction and/or inspection, are re-introduced into the water inlet,
- in which a cleaning body (20) is passed through a water-bearing tube (6) which is fitted out for determining the cleaning efficiency by measurement, characterized in that
- the water in the interior of the tube (6), is heated through the tube wall owing to an external heat source, and that
- at a predetermined point of the tube (6), the temperature variation at a cleaning body (20) passing through the tube (6) is measured and evaluated.

2. Method according to Claim 1, characterized in that the tube (6) selected is a tube of the heat exchanger (1).

3. Method according to Claim 1 or 2, characterized in that the temperature variation is measured at at the end of the particular tube (6).

4. Method according to Claim 2 or 3, characterized in that the temperature variation is measured on several tubes (6) of one and the same heat exchanger (1) or of one and the same heat exchanger pass.

## Revendications

1. Procédé pour mesurer l'efficacité de nettoyage des corps nettoyants qui sont entrés dans l'entrée de l'eau en circuit pour le nettoyage des tubes d'échangeurs de chaleur à faisceau tubulaire, rincés par les tubes, captés dans la sortie de l'eau et, après avoir traversé un sas, entrés à nouveau dans l'entrée de l'eau pour nouvelle entrée et/ou inspection,
- dans lequel un corps nettoyant (20)est guidé à travers un tube (6) conducteur d'eau qui est équipé pour la détection par technique de mesure de l'efficacité de nettoyage,
**caractérisé en ce**
- que l'eau à l'intérieur du tube (6) est réchauffée à travers la paroi du tube par suite d'une source de chaleur extérieure et
- que l'allure de la température est mesurée à un endroit prédéterminé du tube (6) pour un corps nettoyant (20) qui traverse le tube (6) et qu'elle est exploitée.

2. Procédé selon la revendication 1, **caractérisé en ce** qu'un tube de l'échangeur de chaleur (1) est choisi comme tube (6).

3. Procédé selon la revendication 1 ou 2, **caractérisé** **en ce** que l'allure de la température est mesurée à l'extrémité du tube respectif (6).

4. Procédé selon la revendication 2 ou 3, **caractérisé en ce** que l'allure de la température est mesurée sur plusieurs tubes (6) d' un même échangeur de chaleur (1) ou d'un même parcours d'échangeur de chaleur.
